# EUROPEAN PATENT APPLICATION

(11) **EP 1 798 726 A1**
(43) Date of publication of application: **20.06.2007**
(21) Application number: 05112338.8
(22) Date of filing: 16.12.2005
(51) Int. Cl.: G11B 20/18, G11B 20/12

(54) **Methods and apparatuses for writing data, for reading data, and for administrating data carrier errors; and data carriers**

(71) Applicant: DEUTSCHE THOMSON-BRANDT GMBH, 78048 Villingen-Schwenningen (DE)
(72) Inventor: Winter, Marco, 30173, Hannover (DE)
(74) Representative: Thies, Stephan

(57) **Abstract**

For administrating data carrier errors (Def), for recording data onto a data carrier and for retrieving data therefrom, recorded sequences are treated as a single file extents (E) as long as they reside on consecutive data carrier addresses, regardless of whether or not errors (Def) were identified during writing. During recording (CW), in case of bad locations being encountered (Wdef), writing is retried (Cont) in a low level domain, error information is kept separate from file system information. During retrieval, all those locations (A1,A2) where no error was identified during writing are physically being read, whereas, when the reading arrives at a bad location (Def), instead of outputting read data, a predefined data pattern (PDP) is output while the bad locations (Def) are being traversed, and the bad location is skipped (s) at the application level.

## Description

### Field of the invention

The present invention relates to data carrier access, in particular to methods and apparatuses for recording and retrieving data, and for administrating data carrier errors; and to a data carrier as used therein.

### Background of the invention

Defect sectors may occur during recording on writable data carriers in a drive. In a PC context, as soon as such a defect sector is detected, the drive will stop the recording and exit with an error condition. Typically, the recording will be continued several sectors after the error. Not knowing about the optimal location where to continue, an empirical safety distance will likely be employed between the detected defect location and the continuation, in an attempted compromise between the likelihood of successfully skipping the bad disc part, and some "good" disk part potentially being wasted. Wasted sectors, i.e. perfectly writable sectors not being written to, occur and lead to unnecessarily long delays for a later playback because of unnecessarily long jumps; and may even lead to delays during the ongoing recording in cases of buffer overflow during recording, or buffer underflow during playback. Depending on the retry strategy, the drive may in the other extreme allocate for retry sectors immediately after the erroneous disc area, in which case the following recording is very likely to fail too. The reason is that bad sectors, when due to fingerprints or disk surface defects like bubbles, often occur in groups. In these cases, actually, a continuation several sectors away from the bad sector would be more appropriate.

With respect to the control flow, stream recording on a PC will typically be handled between an application, a file system manager, also denoted as FSM in the following, and the drive. The described way of error handling results in a lot of communication overhead between these components, implying delays which may be fatal for real-time recording. The difficulties stem from the fact that applications in most PC systems are not allowed or able to control a disk drive in that detail as to be able to ask to skip a specific amount of sectors.

A problem addressed by the invention is to improve the data carrier write error handling by avoiding unnecessary overhead and optimising data carrier accesses.

### Invention

This problem and others are addressed by the methods and apparatuses of this invention.

According to the invention, a data carrier drive, after recognising errors during recording, itself continues the recording, and does not hand over the control to an invoking process. The continuing is done by repeating i.e. retrying the recording of that data on the next sectors or positions, if necessary several times, until recording is successful. Information about the erroneous positions is memorised and stored on the data carrier before eject. This is necessary because such information is needed for correct data retrieval. If an application requests a playback of thus recorded data, the drive sends, whenever erroneous positions of the data carrier are met, a dedicated special data pattern which can otherwise not occur. The application recognizes the special pattern and skips it, knowing that it is just a "filler" indicating "void" data, and that the logically next data will follow after the special pattern.

With respect to the FSM, another aspect becomes obvious, which contributes to the advantages of the invention: According to the invention, even the bad locations continue to be part of the file extents into which a recorded stream is organised. For starting playback, the application sends a request to the FSM. The FSM locates the desired data on the medium and starts the reading from the medium by sending appropriate file extent read commands to the drive. The drive sends all the data as requested by the FSM, with the special error handling as described. The FSM, not knowing whether or where the addressed locations on the data carrier actually were "bad", and itself not knowing about the special meaning of the dedicated special data pattern, agnostically hands over the data to the application. Only there, in the application, is the special data pattern skipped and the contiguous data are spliced together. In all, no data is lost, unnecessary control handshake is avoided, and the only delay incurred is that of skipping the truly erroneous positions on the data carrier.

The invention amounts to a new recording strategy in combination with a special read rule for the drive, so that the recording strategy is left to the best expert in the whole system, namely the drive itself. By handling the errors between the application and the drive, realtime recording can be done independent of the FSM in between.

In a method for administrating data carrier errors according to the invention, those errors are considered which are identified during writing the data carrier. The method involves a file system handling unit and a drive control unit. These units may be separate software processes running independently on a general purpose multitasking PC CPU, but they may as well be physically separate pieces of hardware. In the method, the file system handling unit organises a file recording into a series of one or more file extent recordings and manipulates files and file extents. The drive control unit generates, maintains and uses an error information about where on the data carrier errors have been identified during writing. According to the invention, then, in the organising, each recorded sequence of consecutive physical or logical addresses on the data carrier is treated as a single file extent, regardless of whether or not an error was identified during writing to it; and the manipulating is performed without any access to the error information. This has the advantage of avoiding any time consuming handshake between the file system handling unit, the drive control unit, and an application unit that might also be involved. By avoiding handshake, idle rotations might also be avoided if the data carrier is of disk type.

In a method for recording data according to the invention, a sequence of data blocks is written into a sequence of data cells on the data carrier. During the writing, any of the data blocks where the writing fails is detected as a failed block. In case a failed block was detected, writing it is retried in subsequent data cells, until either the writing is successful or a timeout is reached, and the positions of all those data cells where the writing failed are memorised for later use as bad locations. After a failed block has successfully been written in retry, the writing is resumed starting with the data block after the failed block. In all this, any subsequence of one or more consecutive data cells which reside on consecutive physical or logical addresses on the data carrier is treated as a single file extent, regardless of whether the writing to the data cells within the subsequence was successful or failed. Information about the bad locations is made available on the data carrier. This has the advantage that handling the defect is completely done on a low level, e.g. in a drive control unit. The file system level, by not discriminating between bad and good locations, is kept completely agnostic of the errors. Both contributes to avoiding time consuming handshakes and idle data carrier accesses like idle rotations.

In an advantageous extension of the recording method, a bad location information about the bad locations is transmitted, during or at the end of the recording, from an involved drive control unit to an involved application unit in its role as the host of the drive control application. Again not involving any file system handling unit in the error handling, this allows the application unit to take into account a knowledge about the bad locations in a way that is optimally adapted to a context of the application. The application unit optionally incorporates the bad location information into metadata associated with the recorded data and stores the metadata on the data carrier alongside the recorded data.

One way of making available information about the bad locations on the data carrier is entering dedicated entries designating the bad locations as such into a defect list of known structure contained in the data carrier. In an alternative way, the making available is achieved by defect entries in a separate defect list exclusively dedicated to indicate bad locations.

For retrieving data according to the invention, an application unit sends a file retrieve request to a file system handling unit, the file system handling unit derives from the file retrieve request a series of one or more file extent retrieve requests referring to extents of the requested file, and forwards the file extent retrieve requests to a drive control unit. The drive control unit accesses the information about the bad locations on the data carrier, and reads requested data from a requested file extent, wherein it physically reads all those of the sequence of data cells of the file extent which are not bad locations and forwards the read data to the application unit, whereas in case the reading arrives at a bad location, it forwards, instead of any read data, a predefined data pattern to the application unit while it traverses the bad location together with any directly subsequent bad locations, if existing. The application unit accepts any forwarded data which does not contain the predefined data pattern as valid data, and discards any forwarded data which contains the predefined data pattern.

One way of traversing the bad locations according to the invention is done at the same speed as the reading, so that the forwarded predefined data pattern is as large as the traversed bad locations. Alternatively, traversing is performed by jumping to a location after the bad locations, so that the size of the forwarded predefined data pattern results from a predetermined forwarding data rate and the jump time. Since starting and terminating a jump in itself causes some idle time, jump traversing will be the method of choice only for bad locations exceeding a certain size.

According to the invention, in contexts where all zero data blocks can not occur as valid data, a sequence of all zero bytes is used as the predefined data pattern. Advantageously, zero bytes are easy to generate and to detect in any wanted length. In other contexts, when valid data blocks are all mandated to have a block header different from zero, an advantageous predefined data pattern starts with a sequence of zero bytes to indicate its nature, and then can contain, e.g. in its tail, preferably following the starting zero sequence, an indication about its overall length, typically coded as an unsigned integer number. Such information, when contained in the predefined data pattern itself, can ease the task of discarding, in the application, the predefined data pattern from the incoming data.

Advantageously the invention foresees to mark the recorded data as a whole in order to indicate that they need to be accessed using the retrieval method according to the invention. In one way of such marking, one or more marks are inserted at the beginning and/or in intervals during the data. In another way, marking is achieved by using for the recorded file a file name obeying a predetermined syntax assumed to be reserved exclusively for files needing the retrieval method of the invention.

Recording apparatuses according to the invention have an application unit and a drive control unit. Specifically, the drive control unit of the apparatus has a failed block detector which monitors and detects whether an error occurs during writing, and has a retry unit which is directly triggered by the failed block detector, without the application unit being involved in such triggering.

Advantageously, in the recording apparatus, the drive control unit is so equipped that, after the failed block detector has detected that an error has occurred during writing, its retry unit first retries, at least once, to record the failed block to the data carrier, before optionally sending any error message to the application unit. With other words, the application unit does not learn that an error has occurred until after the drive control unit has, on its own, made at least one attempt to retry the writing. And even then, the application unit will not necessarily learn about the error. Namely, if the mentioned retry attempt was successful, there is no need to send any error message to the application, which will consequently not be done.

In one recording apparatus according to the invention, the application unit is equipped to transmit control commands drawn from a control command set, and the control command set encompasses a first recording command of known type, and specifically a second recording command which indicates that the drive control unit shall record the data using the method of the invention. In another recording apparatus according to the invention, specifically, the control command set additionally encompasses a recording mode change command which indicates to the drive control unit that for subsequent recordings the recording method of the invention shall be used.

In yet another recording apparatus according to the invention the control command set additionally encompasses a recording mode range setting command which denominates as a recording mode range a subset of data cells on the data carrier, and a recording mode change command which indicates to the drive control unit that for those subsequent recordings which access the recording mode range, the drive control unit shall use the recording method of the invention.

Retrieving apparatuses according to the invention have an application unit and a drive control unit. It is also within the scope of the invention to have a first retrieving apparatus having just the application unit, and to have a second apparatus, for cooperation with the first apparatus, having just the drive control unit. In any of these, the application unit is equipped to transmit control commands drawn from a control command set to the drive control unit, and to receive data from the drive control unit; and the drive control unit is equipped to receive control commands from the application unit, and to send data to the application unit, and has a bad location information accessing unit which is equipped to access a bad location information. Specifically, the drive control unit has a predefined data pattern inserting unit controlled by the bad location information and equipped to insert a predefined data pattern into data sent to the application unit. The application unit has a predefined data pattern discarding unit equipped to discard from data sent to the application unit the predefined data pattern.

In one retrieving apparatus according to the invention, the control command set encompasses a first retrieving command of known type. Specifically, the control command set additionally encompasses a second retrieving command which indicates that the drive control unit shall retrieve the data using the retrieving method of the invention.

In another retrieving apparatus according to the invention, specifically, the control command set additionally encompasses a retrieving mode change command which indicates to the drive control unit that for subsequent retrievals the retrieving method of the invention shall be used.

In yet another retrieving apparatus according to the invention, specifically, the control command set additionally encompasses a retrieval mode range setting command which denominates as a retrieval mode range a subset of data cells on the data carrier, and a retrieval mode change command which indicates to the drive control unit that for those subsequent retrievals which access the retrieval mode range, the drive control unit shall use the retrieving method of the invention.

Yet another retrieving apparatus according to the invention is specifically equipped to use the retrieving method of the invention for retrieving all those data that are marked in the way disclosed in the invention.

A data carrier which was written to by the recording method of the invention contains data organised in one or more files, where each file is subdivided into one or more file extents and each file extent consists of one or more data cells of the data carrier. The data carrier additionally contains file system data describing the files and file extents. Specifically, at least one of the file extents encompasses data cells to which data have successfully been written as well as bad data cells to which writing of data was impossible or erroneous; and the data carrier additionally contains, separate from the file system data, an information about positions of the bad data cells.

### Drawings

Exemplary embodiments of the invention are illustrated in the drawings and are explained in more detail in the following description.

In the figures,
- Fig. 1: shows the top level command hierarchy from an application down to a drive;
- Fig. 2: illustrates the address space allocation when data flow in a prior art PC from the disk to the application;
- Fig. 3: illustrates the address space allocation when data flow from the disk to the application in a PC according to the invention;
- Fig. 4: shows an example illustrating a prior art method of writing;
- Fig. 5: shows an example illustrating a prior art writing method with skipping some sectors;
- Fig. 6: shows an example illustrating the writing method of the invention;
- Fig. 7: shows functional units of a recording apparatus of the invention;
- Fig. 8: shows functional units of a retrieving apparatus of the invention.

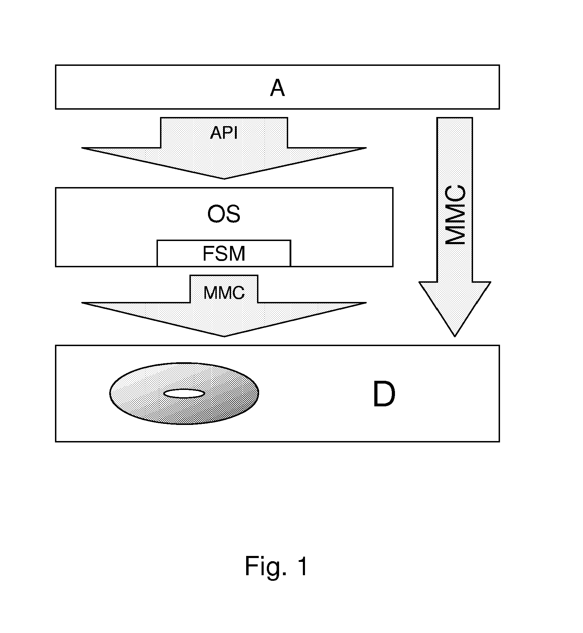

Fig. 1 shows the top level command hierarchy on a PC, from an application A down to a data carrier drive D. The application A communicates with the operating system OS using an Application Programming Interface API of an Operating System OS. A File System Manager FSM constitutes part of the Operating System OS. The File System Manager FSM, as well as the Application A itself, communicate with the Drive D using MultiMedia Commands MMC. All through the following, it will be assumed that the data carrier in the drive D is an optical disk, like CD, DVD, HD-DVD, or Blu-ray Disk BD. But, obviously, all considerations and the principles of the invention are valid and can be used for any data carrier where write errors may occur and can be detected at write time, be it by techniques like direct read after write, also known as DRAW, or by other means like evaluating signals of focus or tracking servo loops in the drive D.

Defect sectors may occur during real-time recording of audiovisual bitstreams, also known as AV streams, on writable optical disks. As soon as the drive D recognizes that recording failed, it will stop the recording and send an error report to the host, typically the Operating System OS of the PC. The PC then has to consider the nature of the occurred error and has to decide how to proceed, e.g. to continue the recording several sectors after the failed recording. But, because a general purpose PC does not know about the optimal location where to continue the recording, it will apply an empirical safety distance between the failed recording and the continuation, in order to skip the bad disc part. That leads to wasted sectors, i.e. perfectly writable sectors not being written to, to unnecessarily long delays for a later playback because of unnecessarily long jumps; and may even lead to delays during the ongoing recording in cases of buffer overflow during recording, or buffer underflow during playback.

Stream recording on a PC will typically be done by the following steps: The application A sends a recording request to the File System Manager FSM, the FSM searches for free space on the disk, sends a recording command to the drive D using known so-called multimedia commands MMC, and informs the application A about the established write access to the drive D. The application A sends stream data through the established connection via the FSM to the drive D, and eventually sends a stop command via the FSM to the drive D.

If an error occurs during this writing and the drive D recognizes this, typically it will stop the recording and send an error message to the FSM, which, in turn, will query the application A how to continue. If the application A intends to continue the recording, it has to inform the FSM either to continue the last recording in an append mode, or to write a new stream, in which case it is up to the application A to logically combine the two streams. In any case, a lot of communication overhead results between the drive D, the FSM and the application A, implying a delay which may be dreadful for real-time recording.

Depending on the retry strategy, the drive D may as well allocate retry sectors immediately after the erroneous disc area, in which case the following recording is very likely to fail too. Bad sectors, when due to fingerprints or disk surface defects like bubbles, often occur in groups. In these cases, actually, a continuation several sectors away from the bad sector would be more appropriate. This kind of retry strategy is being applied because applications in most PC systems are not allowed or able to control a disk drive in that detail as to be able to ask to skip a specific amount of sectors.

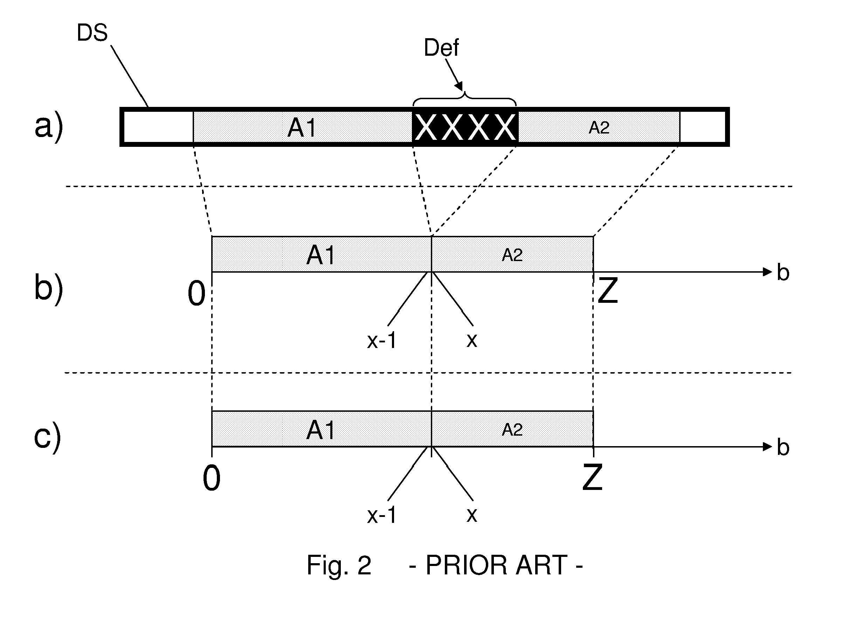

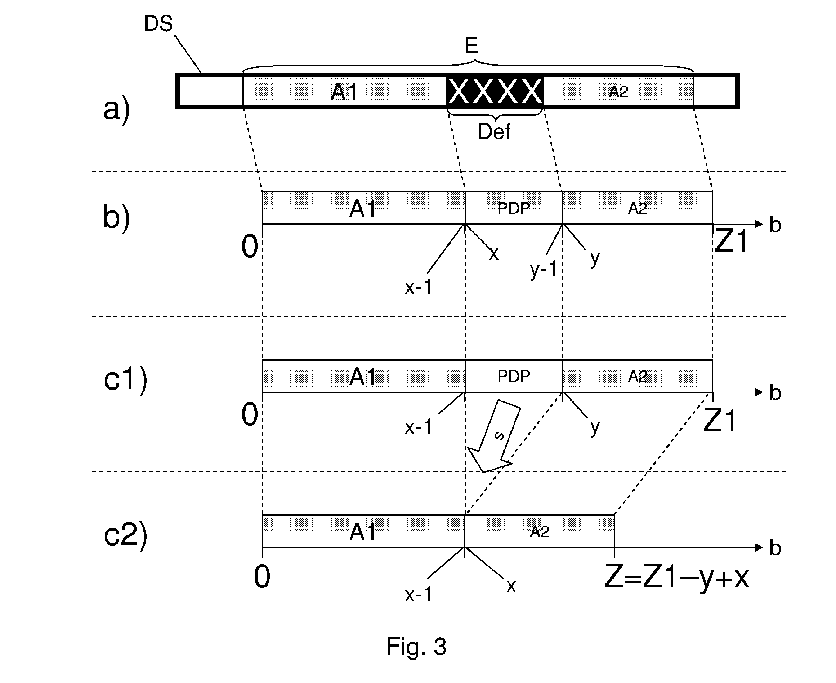

Figs. 2 and 3 illustrate the address space allocation when data flow in a PC from the disk to the application, i.e. during retrieval. Fig. 2 shows it for a conventional prior art PC. In Fig. part a), allocation at the physical medium level is shown, in Fig. part b) at the file system level, and in Fig. part c) at the application level. In Fig. part a), an overall disk space DS is partly allocated to a first part A1 and a second part A2 of a file, with some defect sectors Def intervening. In Fig. parts b) and c), address space allocation is shown over a byte address b, running from a hypothetical first start address 0 to a first end address x-1, and from a second start address x to a second end address Z. Here, the skipping of the bad sectors will be done either at the input of the file system manager level or in the drive, e.g. by an appropriate drive based defect management.

Fig. 3 illustrates the address space allocation during retrieval in a PC according to this invention. In addition to Fig. parts a) and b) defined as in Fig. 2, Fig. part c1) shows the data received by the application, c2) shows the data stream available within the application. Here, the data flow from the drive up to into the application includes, in the address range x to y-1, a Predefined Data Pattern PDP, inserted by the drive instead of the bad sectors Def, and then, in the address range y to Z1, the second part A2 of the file. Due to the inserted predefined Data Pattern PDP, the end address Z1 is bigger than the end address Z of the case illustrated in Fig. 2. The transition from c1) to c2) illustrates the discarding or skipping s of the Predefined Data Pattern PDP being done in the application level, by recognising the Predefined Data Pattern PDP and concatenating the adjacent file parts A1, A2. Finally, the data stream shown in Fig. part c2) corresponds to that of Fig. 2 c), and has the original length Z. Note that, depending on the strategy used to traverse the defect areas Def, the Predefined Data Pattern PDP does not necessarily have the same size as the defect area Def.

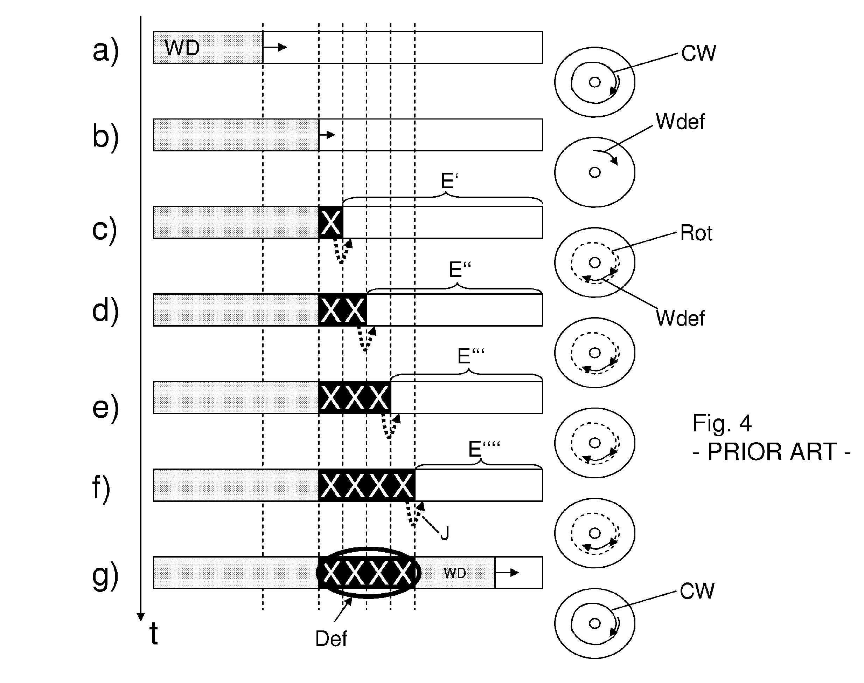

Fig. 4 shows an example illustrating a prior art method of writing. In Fig. parts a) up to g), different disc area states at consecutive times t are indicated, where an address space is partly filled with Written Data WD. In the right, the small circles shown between the states indicate when additional operations between the drive, the FSM of the Operating System, and the application lead to idle disc rotations Rot, which always mean delays during recording. In the transition from state a) to state b), as well as after state g), continuous writing CW is assumed, i.e. no errors are detected. After each defect writing Wdef, i.e. a writing that runs into a defect Def, the FSM stops the recording and communicates with the application. Then, the application requires an allocation of a new extent to continue the recording. Then the FSM allocates, at a position just behind the defect Def, the next extent E' to continue the recording. This may need additional jumps on the disc to access appropriate File System data, it will in any case cause one jump J to access the newly allocated position, and also some idle disk rotations Rot. In cases of larger defects like fingerprints, several blocks are defect, so that the procedure shown in state c) repeats 4 times, as shown in states d) e) f) g), with the new extent being re-positioned each time E", E'", E"". After these delays the recording of the stream continues. Of course, after so many delays a buffer overflow may have occurred.

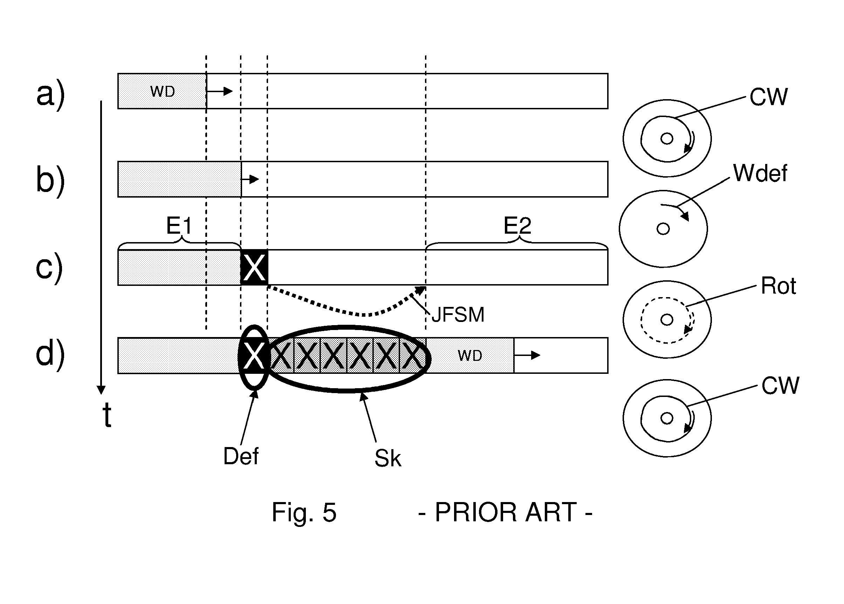

Fig. 5 shows a simple prior art strategy to avoid the repeated handshake and delay, using conventional tools and assuming an application which is able to control the file allocation. As before, in Fig. part b), a defect writing Wdef occurs. At Fig. part c) the FSM stops the recording. The application closes the already recorded data as one extent E1 and allocates a new extent E2, logically continuing the closed extent, at a position several data blocks later. Via the FSM, the application causes a jump JFSM to this location, and the recording continues there. The gap between the two extents contains one sector Def known to be defect, plus some skipped sectors Sk, the status of which is unknown, they may be defect or ok. In total, the gap between the extents can rightfully only be marked as "probably defect". Here, too, idle disc rotations Rot lead to delays. And, of course, the defect may actually be larger than expected, i.e. the drive may recognize another defect.

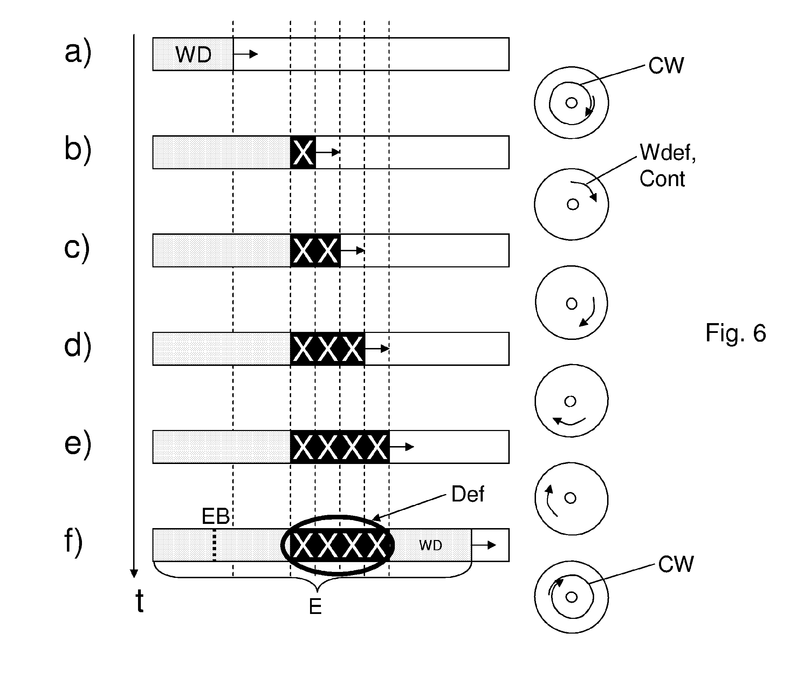

Fig. 6 shows an example illustrating the writing method of the invention. At the state shown in Fig. part b), the drive recognizes a failed recording Wdef, tries Cont to record the same data block on the next address inside the allocated area, again and again, as shown in states c) d) e), until in state f) the recording of this block has finally succeeded. It can be seen that no idle disc rotations occur. The entire written area, including the defects Def, is treated as a single extent E. Note that this doesn't actually preclude that extra extent borders EB may exist in the written area for other reasons like when writing into a partially filled fragmented disk. In this case, when transiting such an extra extent border EB, the "next address inside the allocated area" will be situated in a separate extent. With other words, what states a) through f) show, is not necessarily a compact physical address space or a compact geometric location on the disk's track. In a situation, where for recording a file, a sequence of more than one disjoint extents has been allocated from the outset, the writing method of the invention actually amounts to not introducing any additional extent borders when an erroneous area Def is being encountered during recording, or not shortening the originally allocated extents. Extents are left as they were allocated, completely disregarding any information about write errors Wdef because of erroneous areas Def being found in them.

Optionally, a combination of the writing methods of Figs. 6 and 5 may be useful: If, after a predefined timeout, the method of Fig. 6 doesn't succeed in recording, a "jump away" strategy as illustrated in Fig. 5 may be applied as a last resort. In yet another context, if the drive is able not only to recognise failed recordings, but also to differentiate between different levels of severity of failure, then it may be advantageous to initiate a "jump away" strategy immediately for those cases where a particularly severe writing failure has been diagnosed.

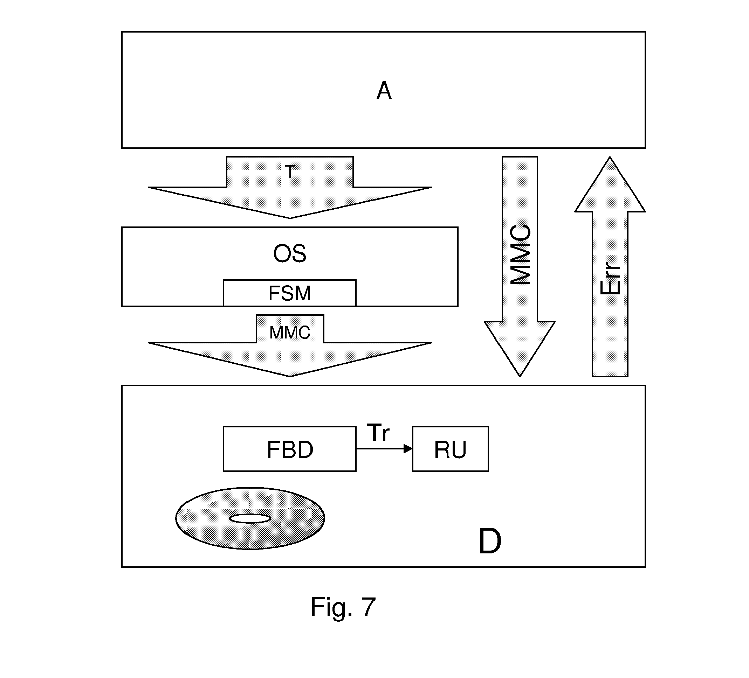

Fig. 7 shows functional units of a recording apparatus of the invention. The drive control unit D is equipped with a failed block detector FBD which detects errors during writing, and with a retry unit RU directly triggered Tr by the failed block detector FBD. Fig. 7 illustrates that neither the application A nor the File system manager FSM are involved in triggering or performing the retry. Only after at least once triggering Tr a retry, the drive control unit D may send an error message Err to the application A.

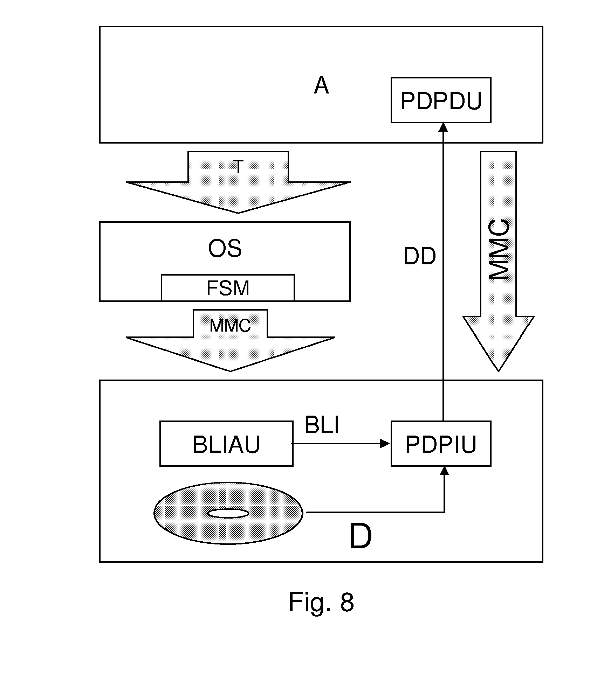

Fig. 8 shows functional units of a retrieving apparatus of the invention. Here, the drive control unit D is equipped with a bad location information accessing unit BLIAU which accesses a bad location information BLI and forwards it to a predefined data pattern insertion unit PDPIU. Whenever the reading encounters a bad location as identified in the bad location information BLI, the predefined data pattern insertion unit PDPIU inserts a predefined data pattern into the data DD that are forwarded to the application A. The application A is equipped with a predefined data pattern disposal unit PDPDU which eliminates all instances of the predefined data pattern PDP from the data DD forwarded to the application A.

With other words, for administrating data carrier errors Def, for recording data onto a data carrier and for retrieving data therefrom, recorded sequences are treated as a single file extents E as long as they reside on consecutive data carrier addresses, regardless of whether or not errors Def were identified during writing. During recording CW, in case of bad locations being encountered Wdef, writing is retried Cont in a low level domain, and error information is kept separate from file system information. During retrieval, all those locations A1, A2 where no error was identified during writing are physically being read, whereas, when the reading arrives at a bad location Def, instead of read data, a predefined data pattern PDP is being output while the bad locations Def are being traversed, and is being skipped s at the application level.

This has the advantages that realtime recording for PCs can be done in a manner which is at the same time compliant to Consumer electronics, CE, requirements as well as to PC Operating System requirements. The invention constitutes a workaround to avoid typical PC deficiencies in handling realtime streams. With just a few minor rules or new commands for drives and applications, a conventional access can be pretended to the PC Operating System, drive hardware requirements are reduced, and realtime access to streams is provided even in cases of disk defects always imminent in writable optical media. With very minor intrusions, the invention enables or improves realtime access to optical media in all current PC operating systems, which they did not support in prior art. The invention is very cheap to implement, needing just one simple additional command on drive side, typically implemented in drive firmware, and a very simple additional software on the application side.

## Claims

1. A method for administrating data carrier errors (Def) identified during writing (Wdef) the data carrier, the method involving a file system handling unit (FSM) and a drive control unit (D), and having steps of:
- organising, by the file system handling unit (FSM), a file recording into a series of one or more file extent recordings;
- manipulating, in the file system handling unit (FSM), files and file extents;
- generating, maintaining and using, in the drive control unit (D), an error information about where on the data carrier errors (Def) have been identified during writing (Wdef);
the method **characterised in that**:
- in the organising, each recorded sequence of consecutive physical or logical addresses on the data carrier is treated as a single file extent (E), regardless of whether or not an error (Def) was identified during writing (Wdef) to it; and **in that**
- the manipulating is performed without any access to the error information.

2. A method for recording data (A1, A2) into a file on a data carrier, the method having steps of:
- writing (CW) a sequence of data blocks into a sequence (DS) of data cells on the data carrier;
- detecting, during the writing (Wdef), as a failed block any of the data blocks where the writing fails (Def);
- retrying (Cont), in case a failed block was detected, the writing of the failed block in subsequent data cells, until either the writing is successful or a timeout is reached;
- memorising for later use, in cases where a failed block is detected, as bad locations the positions of all those data cells where the writing failed;
- resuming the writing (CW), after a failed block has successfully been written in retry, starting with the data block after the failed block;
- treating as a single file extent (E) any subsequence of one or more consecutive data cells which reside on consecutive physical or logical addresses on the data carrier, regardless of whether the writing to the data cells within the subsequence was successful or failed;
- making available information about the bad locations (Def) on the data carrier.

3. The method of claim 2, wherein a bad location information about the bad locations (Def) is transmitted, during or at the end of the recording, from an involved drive control unit (D) to an involved application unit (A).

4. The method of claim 3, wherein the application unit (A) incorporates the bad location information into metadata associated with the recorded data and stores the metadata on the data carrier alongside the recorded data.

5. A method for retrieving data from a file on a data carrier onto which the data have been recorded according to the recording method of claim 2, the method involving an application unit (A), a file system handling unit (FSM), and a drive control unit (D), and having steps of:
- sending, by the application unit (A), a file retrieve request to the file system handling unit (FSM);
- deriving, by the file system handling unit (FSM), from the file retrieve request a series of one or more file extent retrieve requests referring to extents of the requested file, and forwarding the file extent retrieve requests to the drive control unit (D);
- accessing, by the drive control unit (D), the information about the bad locations on the data carrier;
- reading, by the drive control unit (D), requested data from a file extent, wherein all those of the sequence of data cells of the file extent which are not bad locations are physically being read and the read data are forwarded to the application unit (A), and wherein, in case the reading arrives at a bad location (Def), instead of any read data, a predefined data pattern (PDP) is forwarded to the application unit (A) while the drive control unit traverses the bad location (Def) together with any directly subsequent bad locations (Def), if existing;
- accepting, at the application unit (A), any forwarded data which does not contain the predefined data pattern (PDP) as valid data;
- discarding, at the application unit (A), any forwarded data which contains the predefined data pattern (PDP).

6. The method of claim 5, wherein traversing the bad locations (Def) is performed at the same speed as the reading, and the forwarded predefined data pattern (PDP) is as large as the traversed bad locations.

7. The method of claim 5, wherein traversing the bad locations (Def) is performed by jumping to a location after the bad locations, and the forwarded predefined data pattern (PDP) is as large as necessitated by a predetermined forwarding data rate and the jump time.

8. The method of any one of claims 5 to 7, wherein as the predefined data pattern (PDP) a sequence of all zero bytes is used.

9. The method of claim 2, where the recorded data are being marked, indicating that they need to be accessed using the retrieval method of claim 7 in order to be correctly retrieved.

10. An apparatus for recording data into a file on a data carrier, the apparatus having an application unit (A) and a drive control unit (D) and **characterised in that** the drive control unit (D) of the apparatus has a failed block detector (FBD) equipped to detect errors during writing and a retry unit (RU) directly triggered (Tr) by the failed block detector (FBD).

11. The apparatus of claim 10, where the drive control unit (D) is so equipped that, after its failed block detector (FBD) has detected a failed block, it does not transmit an error message (Err) to the application unit (A) except after its retry unit (RU) has at least once retried recording the failed block to the data carrier.

12. The apparatus of claim 10 or 11, where the application unit (A) is equipped to transmit control commands (MMC) drawn from a control command set and the control command set encompasses a first known recording command and a second recording command which indicates that the drive control unit (D) shall record the data using the method of claim 2.

13. The apparatus of claim 10 or 11, where the application unit (A) is equipped to transmit control commands (MMC) drawn from a control command set and the control command set additionally encompasses a recording mode change command which indicates to the drive control unit (D) that for subsequent recordings the method of claim 2 shall be used.

14. The apparatus of claim 10 or 11, where the application unit (A) is equipped to transmit control commands (MMC) drawn from a control command set and the control command set additionally encompasses a recording mode range setting command which denominates as a recording mode range a subset of data cells on the data carrier, and a recording mode change command which indicates to the drive control unit (D) that for those subsequent recordings which access the recording mode range, the drive control unit (D) shall use the method of claim 2.

15. A first apparatus for retrieving data from a file on a data carrier, the first apparatus having an application unit (A) equipped to transmit, to a second apparatus, control commands (MMC) drawn from a control command set and to receive, from the second apparatus, data (DD) sent to it; the first apparatus **characterised in that** the application unit has a predefined data pattern discarding unit (PDPDU) equipped to discard from the data (DD) sent to the application unit (A) a predefined data pattern (PDP).

16. A second apparatus for retrieving data from a file on a data carrier, in cooperation with the first apparatus of claim 15, the second apparatus being equipped to receive, from the first apparatus, control commands (MMC) drawn from a control command set, and to send, to the first apparatus, data (DD); having a drive control unit (D) with a bad location information accessing unit (BLIAU) for accessing and providing a bad location information (BLI); and **characterised in that** the drive control unit (D) has a predefined data pattern inserting unit (PDPIU) which is controlled by the bad location information (BLI) and is equipped to insert a predefined data pattern (PDP) into the data (DD) sent out.

17. The first apparatus of claim 15, wherein the control command set encompasses a first known retrieving command; the first apparatus additionally **characterised in that** the control command set additionally encompasses a second retrieving command, and **in that** the application unit (A) is equipped to transmit the second retrieving command whenever the data (DD) to be received need to be retrieved using the method of claim 5.

18. The second apparatus of claim 16, wherein the control command set encompasses a first known retrieving command; the apparatus additionally **characterised in that** the control command set additionally encompasses a second retrieving command, and **in that** the drive control unit (D) is equipped to retrieve, whenever it receives the second retrieving command, the data using the method of claim 5.

19. The first apparatus of claim 15, additionally **characterised in that** the control command set additionally encompasses a retrieving mode change command, and **in that** the application unit (A) is equipped to transmit the retrieving mode change command before transmitting a retrieve command for data (DD) that need to be retrieved using the method of claim 5.

20. The second apparatus of claim 16, additionally **characterised in that** the control command set additionally encompasses a retrieving mode change command, and **in that** the drive control unit (D) is equipped to use, whenever it receives the retrieving mode change command, the method of claim 5 for subsequent retrievals.

21. The first apparatus of claim 15, additionally **characterised in that** the control command set additionally encompasses a retrieval mode range setting command and a retrieval mode change command, and **in that** the application unit (A) is equipped to transmit, if data (DD) need to be retrieved using the method of claim 5, the retrieval mode change command to denominate as a retrieval mode range a subset of data cells on the data carrier comprising the data cells where the data (DD) need to be retrieved, and to transmit the retrieval mode change command to indicate that for those subsequent retrievals which access the retrieval mode range, the method of claim 5 shall be used.

22. The second apparatus of claim 16, additionally **characterised in that** the control command set additionally encompasses a retrieval mode range setting command and a retrieval mode change command, and **in that** the drive control unit (D) is equipped to use, whenever it receives a retrieval mode range setting command and a retrieval mode change command, for those subsequent retrievals which access the retrieval mode range denominated in the retrieval mode range setting command, the method of claim 5.

23. The second apparatus of claim 16, additionally **characterised by** being equipped to use the retrieving method of claim 5 exactly for those data that are marked as needing the retrieval method of claim 5.

24. A data carrier containing data organised in one or more files, each file being subdivided into one or more file extents and each file extent consisting of one or more data cells of the data carrier, the data carrier additionally containing file system data describing the files and file extents and **characterised in that**
- at least one of the file extents encompasses first data cells (A1, A2) to which data have successfully been written as well as second data cells (Def) to which writing of data was impossible or erroneous;
- the data carrier additionally contains, separate from the file system data, an information about positions of the second data cells (Def).

25. A data carrier containing computer instructions which, when executed in a computer, will cause the computer to perform the method of any one of claims 1 to 9.
